# EUROPEAN PATENT SPECIFICATION

(11) **EP 1 198 058 B1**
(45) Date of publication and mention of the grant of the patent: **18.01.2012**
(21) Application number: 01912304.1
(22) Date of filing: 13.03.2001
(51) Int. Cl.: H02M 1/42, H02M 7/00

(54) **SINGLE-PHASE AC-DC CONVERTER**
EINPHASENGLEICHSTROMRICHTER
CONVERTISSEUR AC/CC MONOPHASE

(30) Priority: 27.03.2000 JP 2000086329; 31.03.2000 JP 2000099671
(43) Date of publication of application: 17.04.2002
(60) Divisional application: 08002429.2
(73) Proprietor: MITSUBISHI DENKI KABUSHIKI KAISHA, Chiyoda-ku Tokyo 100-8310 (JP)
(72) Inventor: AMANO, Katsuyuki, c/o Mitsubishi Denki K.K, Tokyo 100-8310 (JP); SAITOU, Katsuhiko, c/o Mitsubishi Denki K.K., Tokyo 100-8310 (JP); SAKAMOTO, Hirotaka,c/o Mitsubishi Denki K.K., Tokyo 100-8310 (JP)
(74) Representative: Mounteney, Simon James
(86) International application number: PCT/JP2001/001952
(87) International publication number: WO 2001/073933

(56) References cited:
- EP-A- 0 307 719
- EP-A- 0 838 855
- JP-A- 3 001 481
- JP-A- 6 233 536
- JP-A- 7 031 152
- JP-A- 8 279 421
- JP-A- 10 243 632
- JP-A- 11 142 019
- JP-A- 11 354 958
- JP-A- 62 050 381
- JP-A- 63 077 373
- JP-A- 63 107 464
- JP-A- 2000 069 792
- JP-U- 64 050 686
- PATENT ABSTRACTS OF JAPAN vol. 1995, no. 08, 29 September 1995 (1995-09-29) & JP 07 115774 A (NEC CORP), 2 May 1995 (1995-05-02)
- PATENT ABSTRACTS OF JAPAN vol. 006, no. 032 (E-096), 26 February 1982 (1982-02-26) & JP 56 150972 A (HITACHI LTD), 21 November 1981 (1981-11-21)

## Description

### TECHNICAL FIELD

The present invention relates to a single-phase converter circuit for conducting AC-DC conversion. In particular, the present invention relates to a single-phase converter circuit for conducting power factor improvement, suppression of power source harmonics, DC voltage adjustment, or the like.

### BACKGROUND ART

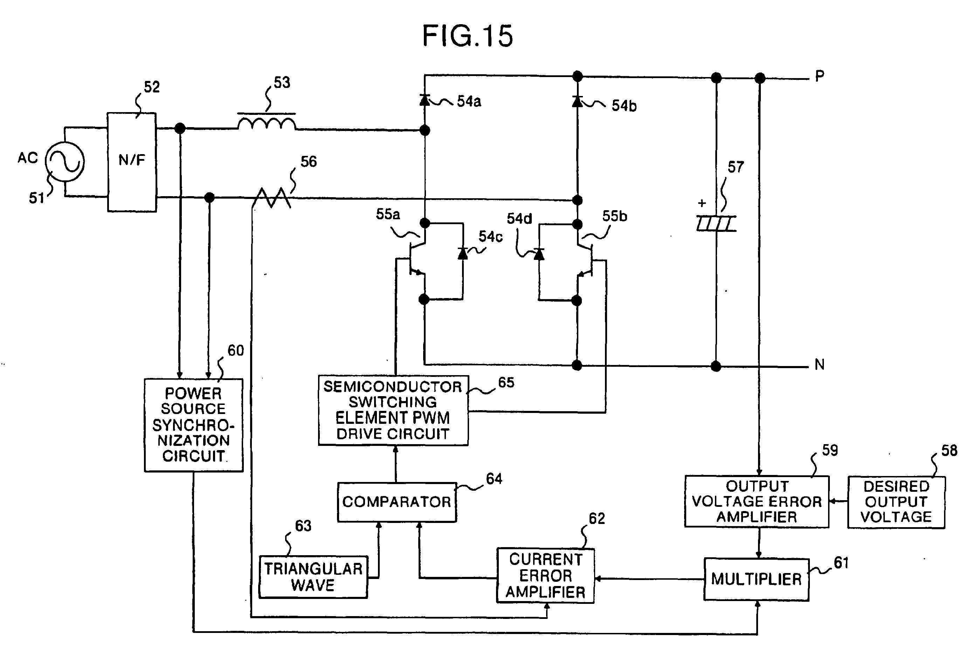

As conventional single-phase converters, there are, for example, single-phase half bridge converter circuits, such as "sine wave input single-phase rectifier circuit" disclosed in Japanese Patent Application Laid-Open No. 10-337034, "rectifier circuit" disclosed in Japanese Utility Model Application Laid-Open No. 64-50686, and"power supply apparatus using PWM control" disclosed in Japanese Patent Application Laid-Open No. 2-237469. Fig. 15 is a diagram showing a configuration of such a conventional single-phase half bridge converter circuit. In this half bridge converter, four diodes 54a to 54d are bridge-connected to form the capacitor input rectifier circuit. The reactor 53 is connected to one of AC side input lines of the capacitor input rectifier circuit. Semiconductor switching elements 55a and 55b are provided in parallel with the diodes 54c and 54d so as to be opposite in polarity to the diodes 54c and 54d.

AC voltage input from the AC power source 51 via the noise filter 52 is converted to DC voltage. The semiconductor switching elements 55a and 55b are PWM-driven by using the current transformer ("CT") 56, desired output voltage 58, output voltage error amplifier 59, power source synchronization circuit 60, multiplier 61, current error amplifier 62, triangular wave 63, comparator 64, and the semiconductor switching element PWM drive circuit 65. Thus, power factor improvement, power source harmonic suppression, DC voltage adjustment, and so on are conducted. Detection of an input current, which is one of control parameters to be used when PWM driving the semiconductor switching elements 55a and 55b, is conducted by the CT 56 provided on an AC side input line.

In this single-phase half bridge converter circuit, switching speed of the semiconductor switching elements 55a and 55b is fast, and the voltage and current changes become steep. Furthermore, in order to reduce the size of the reactor 53, PWM switching is caused by a high frequency carrier having a carrier frequency of at least 20 kHz. Due to influences of such high dV/dt and wiring impedance, there is a fear that common system noise of approximately several hundreds kHz to one hundred and several tens MHz is caused and the noise exerts a bad influence upon other devices. In application to home electric appliances such as air conditioners, there are regulations by laws on noise of the common system such as the noise terminal voltage, and the noise needs to be suppressed so as not to exceed a predetermined reference. In the conventional single-phase half bridge converter circuit, therefore, the large-sized noise filter 52 is provided to suppress the noise of the common system.

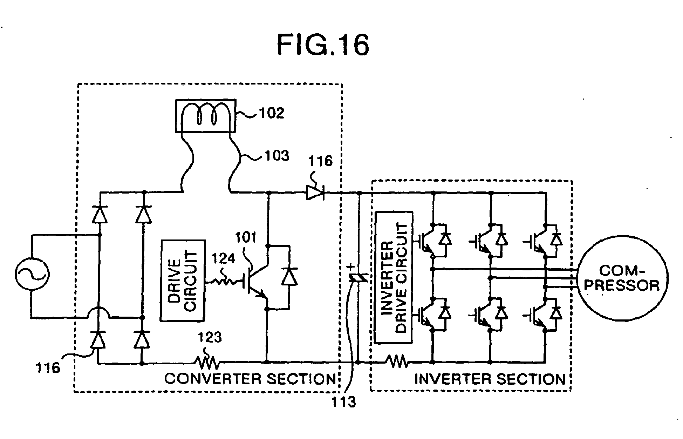

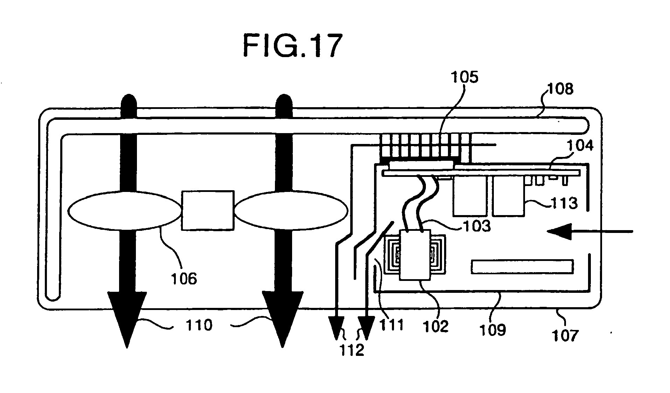

How the reactor is mounted and how it is cooled, in the conventional converter apparatus, will now be explained by referring to Fig. 16 and Fig. 17. Fig. 16 is a simplified circuit diagram of a conventional air conditioner having a converter apparatus for conducting harmonic suppression and power factor improvement by using semiconductor switching elements. Fig. 17 illustrates a reactor mounting state of a converter apparatus in the conventional air conditioner, and it is a sectional view of an outdoor machine of the air conditioner seen from the above.

In Fig. 16, 101 denotes a semiconductor switching element, 102 a reactor for suppressing the harmonics and improving the power factor, 103 a lead wire for electrically connecting the reactor 102 to a main circuit board 104, 113 an electrolytic capacitor, 116 a diode, 123 a shunt resistor, and 124 a gate resistor. In Fig. 17, 105 denotes a radiator attached to the main circuit board 104 to prompt radiation from heat generating components mounted on the board, 106 an outdoor fun, 107 an outdoor machine, 108 a heat exchanger disposed on an upstream side of the outdoor funs 106 in the outdoor machine 107, 109 an electric component box incorporating the main circuit board 104 and the reactor 102, 110 a direct wind from each of the outdoor fans 106, 111 a ventilation hole formed in the electric component box, and 112 a slight wind that flows due to a pressure difference.

As for the reactor 102 of the power factor improving converter circuit of the air conditioner represented by the simplified circuit diagram of Fig. 16, a large current of approximately up to 30 A in peak is flown through the reactor 102 by a compressor motor driven by an inverter. Therefore, the size and the amount of generated heat of the reactor 102 are large, and the weight thereof also becomes large. As a result, the reactor 102 cannot be mounted on the main circuit board 104, and the reactor 102 is electrically connected to the main circuit board 104 having electronic components, such as the semiconductor switching element 101 and the electrolytic capacitor 113, mounted thereon, via the lead wires 103. Furthermore, unlike the semiconductor switching element 101, the reactor 102 is not connected to the radiator 105. Therefore, the reactor 102 is naturally cooled in such a place that a slight wind 112 flown by the outdoor fans 106 of the outdoor machine 107 and a pressure difference, such as the vicinity of the ventilation hole 111.

In the above described conventional technique, however, the cost is high and the housing size is large. In addition, the input current is detected by the CT 56 mounted on a main power source section, which requires a wide wiring pattern. Even in the case where reduction of the board size of an apparatus using a single-phase converter circuit is demanded, therefore, there occurs a problem that the board size cannot be made small and the cost increases. Furthermore, since a large sized noise filter having a high cost is used in order to suppress the common system noise, there is a problem that the board size cannot be made small and the cost increases.

Furthermore, since the conventional reactor of the converter apparatus generates a large amount of heat, there is a constraint on the structure design that it is necessary to secure a ventilation path and dispose the reactor in such a place that ventilation can be easily obtained. As shown in Fig. 17, the outdoor machine of the air conditioner has such a configuration that the outdoor fans 106 and the electric component box 109, which houses the reactor 102 and the main circuit board 104, are disposed side by side inside the heat exchanger 108. Therefore, it is difficult to obtain the direct winds 110 from the outdoor fans 106. In addition, the electric component box 109 has the ventilation hole 111 having a narrow shape as shown in Fig. 17 in order to minimize the entry of dust and moisture. Therefore, the reactor 102 can obtain only slight ventilation flown by the pressure difference.

For such a device that a controller must be incorporated into a narrow electric component box, such as an air conditioner, therefore, there are a constraint of the reactor in structure design that the size is large and the reactor can be placed quite near the ventilation hole, and a problem of a temperature rise in the electric component box, hastened degradation of components such as the electrolytic capacitor on a control board, and a shortened product life. It is also conceivable to mount the reactor outside the electric component box and thereby suppress the temperature rise in the box. However, there is a problem of lengthened lead wires, aggravated working dispersion and productivity, and susceptibility to exposure of a high voltage portion to dust and moisture.

Furthermore, in the power factor improving converter apparatus represented by the circuit shown in Fig. 17, the semiconductor switching element 101 is PWM-controlled with a high frequency carrier (of approximately 20 kHz). Therefore, the current and voltage changes become steep, and high frequency voltage oscillation is caused. This is radiated into the space by using a circuit loop as an antenna. If the lead wires 103 become long, therefore, then there occurs a problem that the antenna becomes large and the amount of radiated noise increases. Especially in the case where a substitute coolant, such as R407C or R410A, which is higher in pressure than R22 is used, the power input of the compressor becomes large and this results in a problem that the problem of the radiated noise becomes remarkable.

Therefore, an object of the present invention is to provide a single-phase converter circuit that can be reduced in size of the board and that can be reduced in cost.

EP-A-0 307 719 discloses a single-phase AC-DC converter circuit as set out in the preamble of Claim 1.

### DISCLOSURE OF THE INVENTION

A single-phase converter circuit according to the present invention comprises the features of Claim 1.

In such an arrangement, the current detector is provided between a bridge circuit and a negative side output terminal. The control unit controls the current transformer (CT) so as not conduct current detection, and controls the small-sized inexpensive current detector so as to conduct current detection. By using a result of this detection as one of control parameters, the switching elements are controlled to conduct power factor improvement, power supply harmonic suppression, DC voltage adjustment, and so on.

The first switching element and the second switching element may be simultaneously switched. As a result, the power factor becomes approximately unity. In addition, the actual output voltage becomes desired output voltage.

The converter circuit may further comprise two reactors respectively provided on two AC side input lines. These reactors are able to suppress common system noise. As a result, the noise filter can be made small-sized and inexpensive.

The two reactors may share a core. As a result, only one shared core is needed. In addition, as compared with the case where two separate reactor having no interlinkage in magnetic flux are provided, the total inductance can be increased and the number of turns can be decreased.

The bridge circuit, the first switching element, and the second switching element may be molded with insulating resin and integrated into one module. As a result, the board size can be further reduced.

### BRIEF DESCRIPTION OF THE DRAWINGS

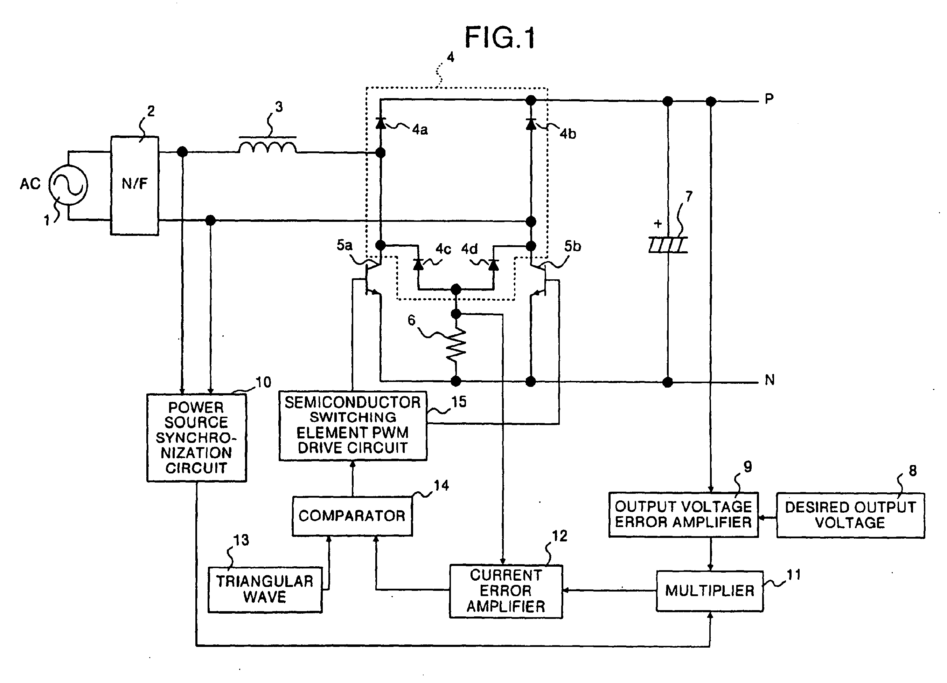

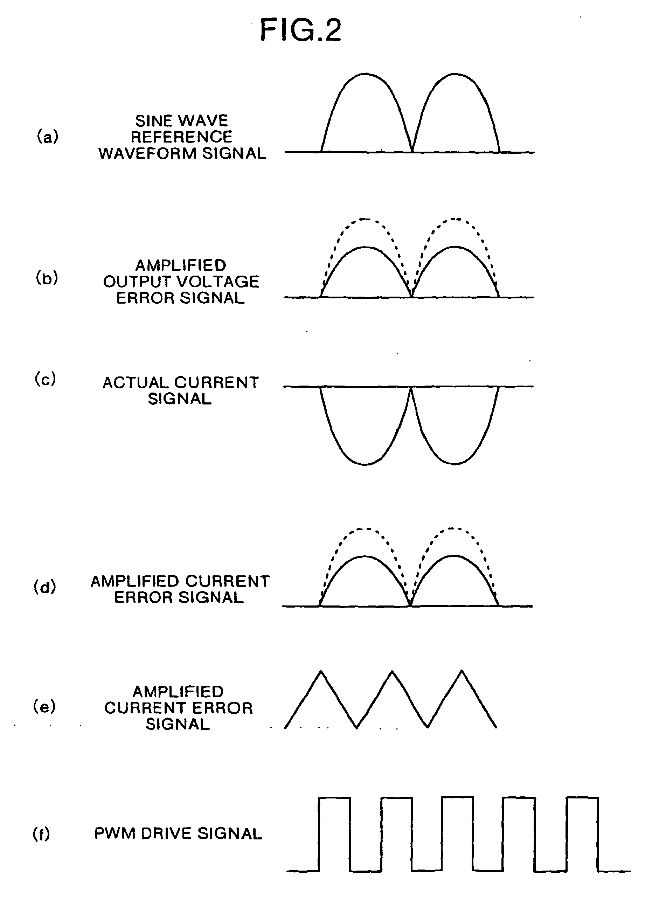

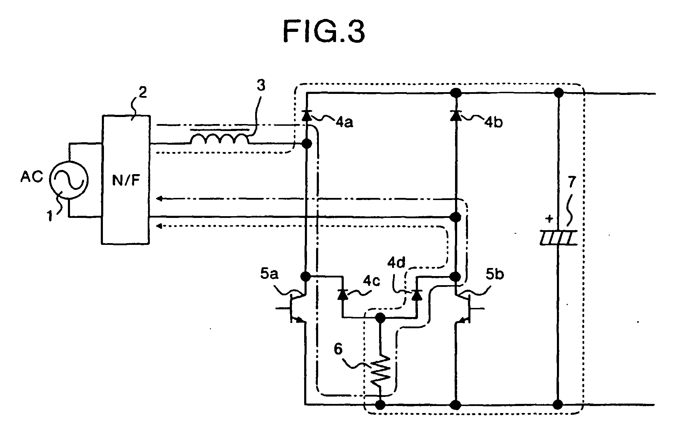

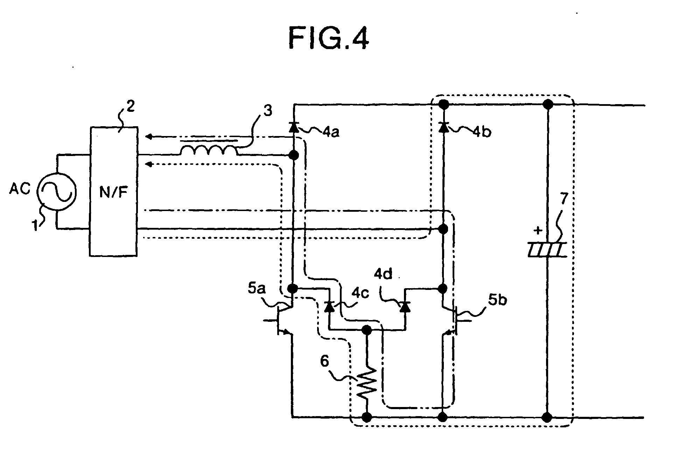

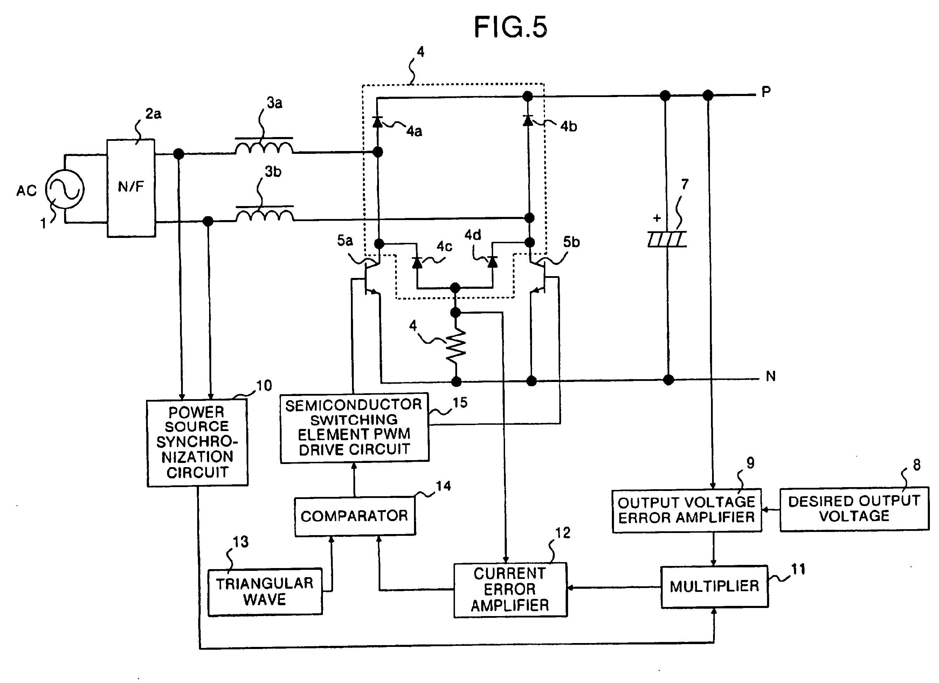

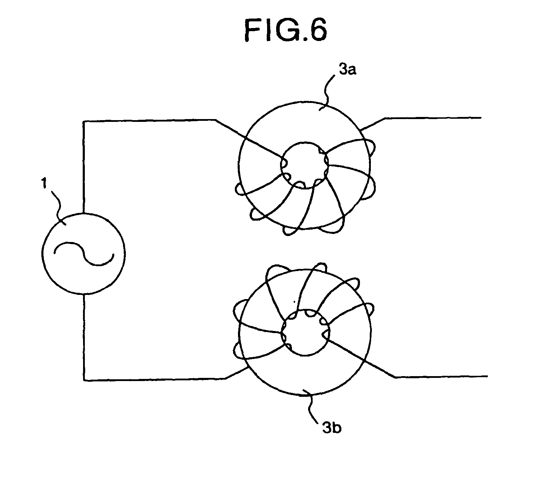

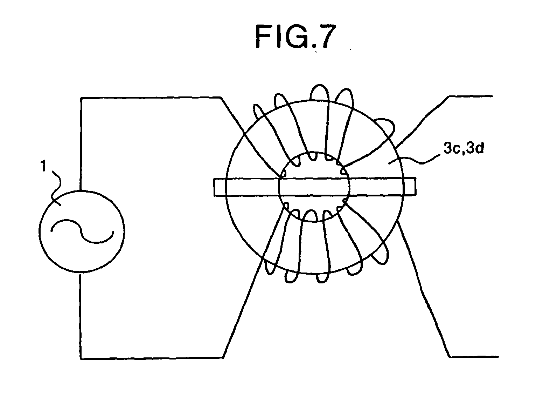

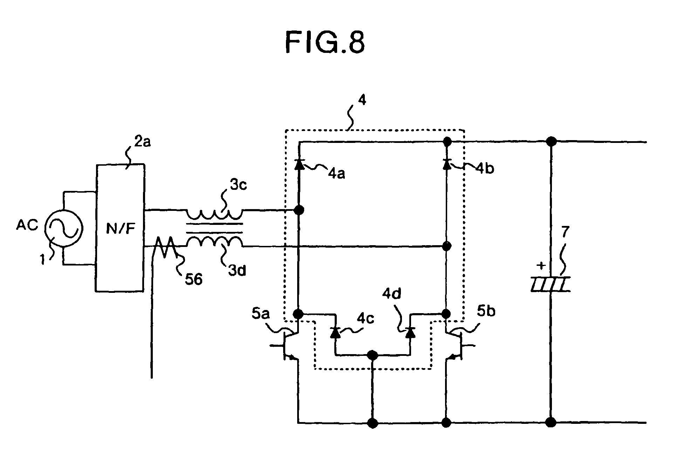

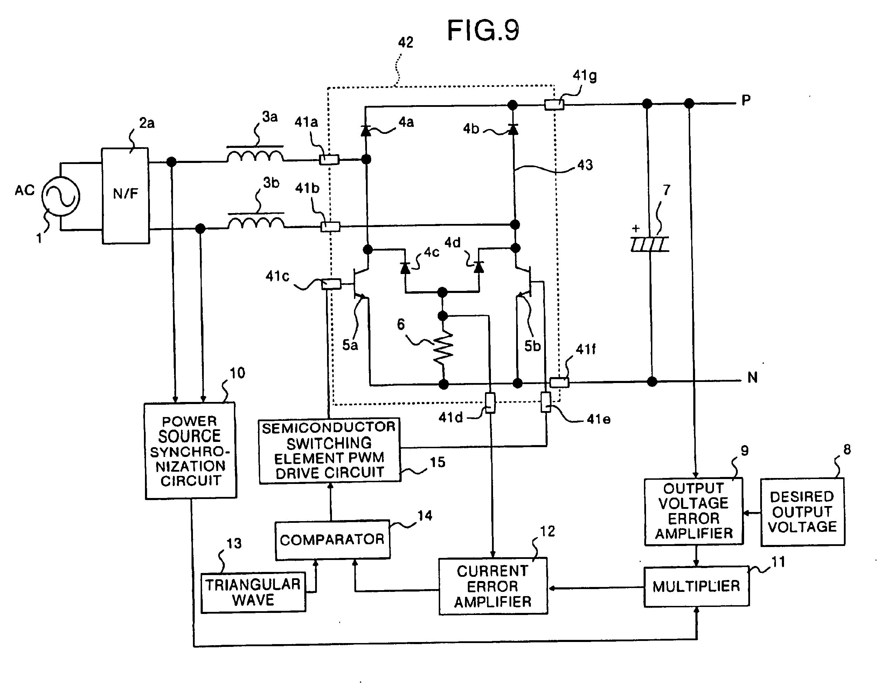

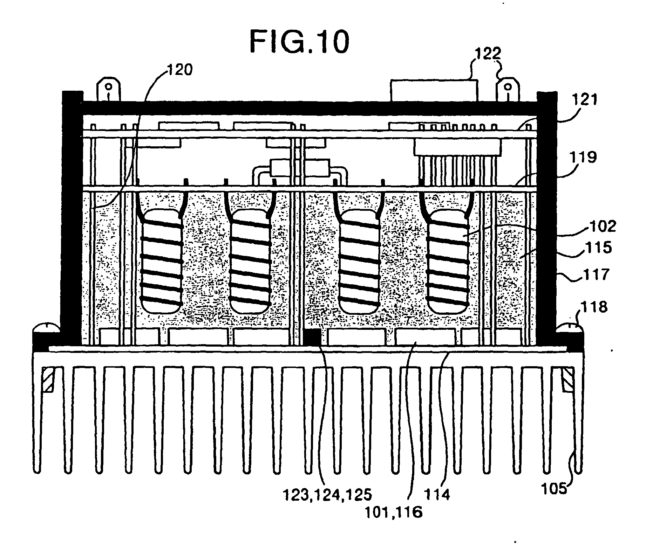

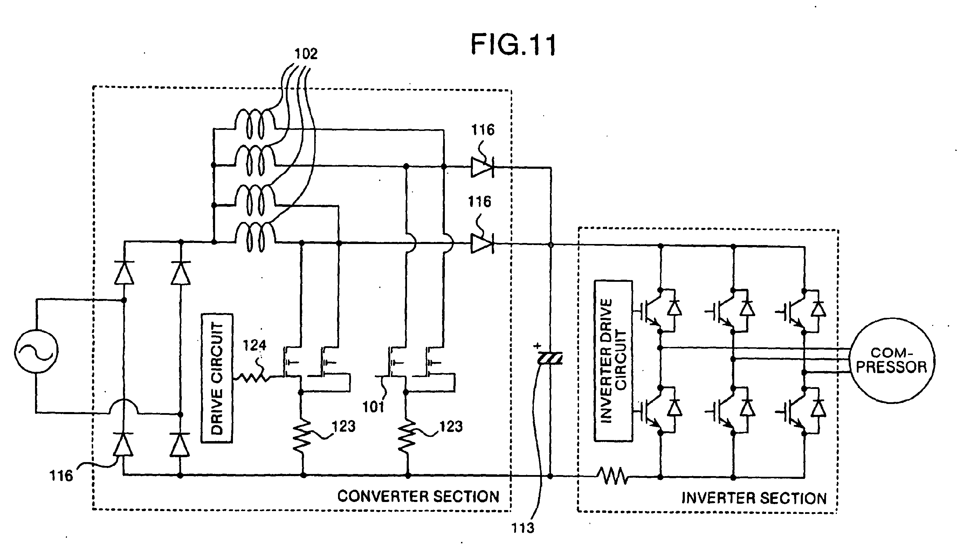

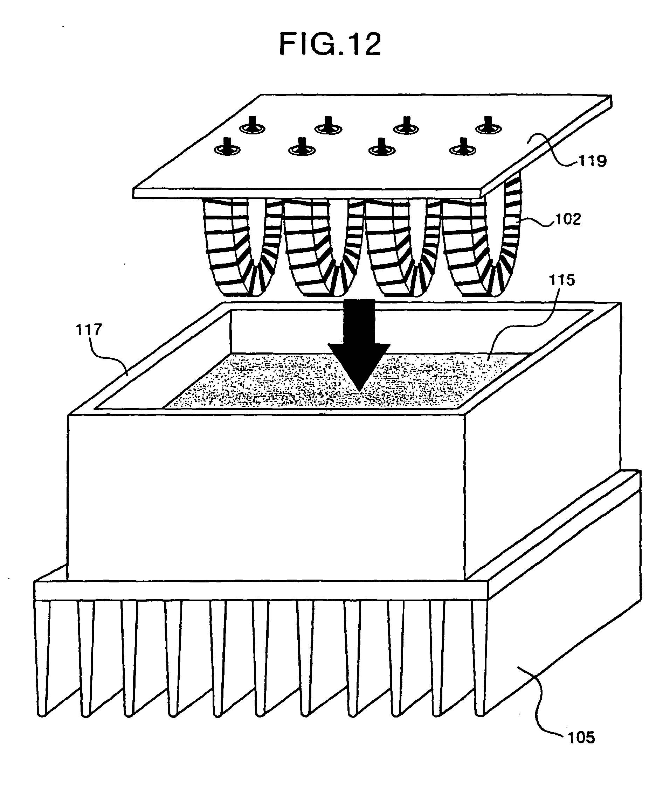

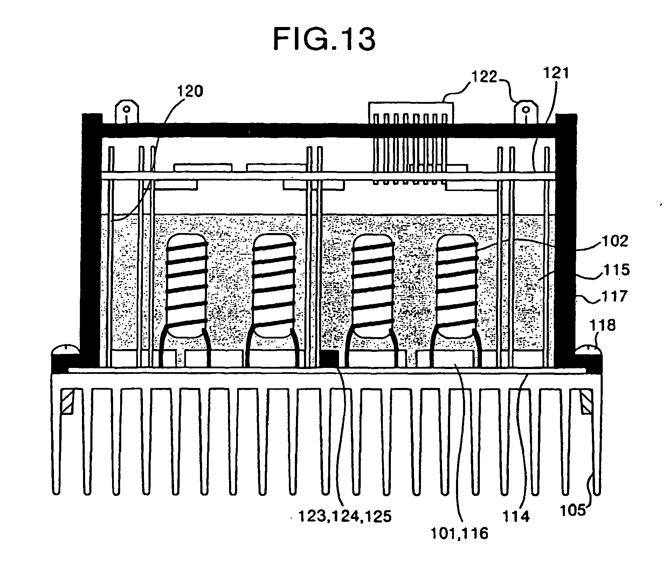

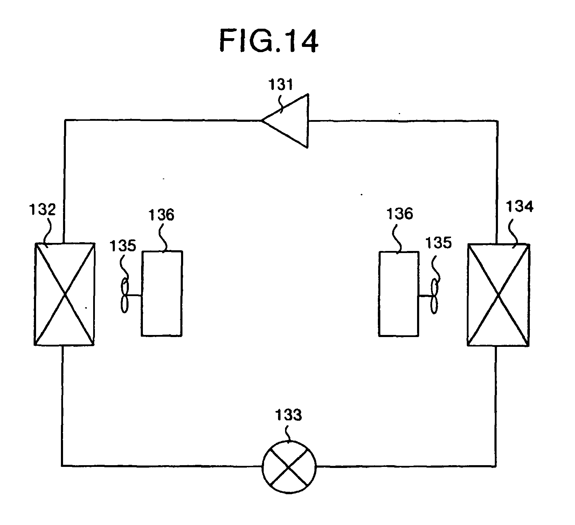

Fig. 1 is a diagram showing a configuration of a single-phase half bridge converter circuit according to a first embodiment of the present invention; Fig. 2 is a diagram showing operation of a single-phase half bridge converter circuit according to a first embodiment; Fig. 3 is a diagram showing a current flow of a single-phase half bridge converter circuit according to a first embodiment; in the case where an AC power supply voltage is positive; Fig. 4 is a diagram showing a current flow of a single-phase half bridge converter circuit according to a first embodiment, in the case where the AC power source voltage is negative; Fig. 5 is a diagram showing a configuration of a single-phase half bridge converter circuit according to a second embodiment of the present invention; Fig. 6 is a diagram showing a configuration of a reactor according to a second embodiment shown in Fig. 5; Fig. 7 is a diagram showing another configuration of a reactor according to a second embodiment; Fig. 8 is a diagram showing a configuration of another single-phase half bridge converter circuit according to a second embodiment; Fig. 9 is a diagram showing a configuration of a single-phase half bridge converter circuit according to a third embodiment of the present invention; Fig. 10 is a schematic sectional view of a converter apparatus according to a fourth embodiment ; Fig. 11 is a simplified circuit diagram of a converter apparatus according to a fourth embodiment ; Fig. 12 is an assembly diagram of a converter apparatus according to a fourth embodiment ; Fig. 13 is a schematic sectional view of a converter apparatus according to a fifth embodiment ; Fig. 14 is a system concept diagram showing a refrigeration cycle apparatus; Fig. 15 is a diagram showing a configuration of a single-phase half bridge converter circuit in a conventional art; Fig. 16 is a simplified circuit diagram showing a converter apparatus of an air conditioner in a conventional art; Fig. 17 is a diagram showing a reactor mounting state of a converter apparatus of an air conditioner in a conventional art seen from the above of an outdoor machine.

### BEST MODE FOR CARRYING OUT THE INVENTION

Embodiments of the single-phase converter circuit, converter apparatus, and the refrigeration cycle apparatus according to the present invention will be explained in detail by referring to the accompanying drawing. By the way, the present invention is not limited by the embodiments .

The single-phase converter circuit according to a first embodiment of the present invention will now be described by taking a single-phase half bridge converter circuit used in an air conditioner and other home electric appliances as an example. Fig. 1 is a diagram showing a configuration of a single-phase half bridge converter circuit according to a first embodiment of the present invention. The single-phase half bridge converter circuit includes the reactor 3 provided on either R line or S line of the noise filter 2 connected to the AC power source 1; the diode bridge circuit 4 for full-wave rectifying the AC voltage supplied from the noise filter 2 and the reactor 3; and the current detection shunt resistor 6 connected between an output N and the diode bridge circuit 4.

Furthermore, the single-phase half bridge converter circuit includes the semiconductor switching element 5a connected in parallel with the current detection shunt resistor 6 and one rectifying element 4c of a side to that the current detection shunt resistor 6 is connected, so as to become opposite in polarity to the rectifying element 4c (so as to flow a current in a sense opposite to that of the rectifying element 4c); the semiconductor switching element 5b connected in parallel with the current detection shunt resistor 6 and the other rectifying element 4d of the side to that the current detection shunt resistor 6 is connected, so as to become opposite in polarity to the rectifying element 4d (so as to flow a current in a sense opposite to that of the rectifying element 4d); the capacitor ("smoothing capacitor") 7 provided between an output P and the output N; the output voltage error amplifier 9 for receiving a desired output voltage 8 and an actual output voltage (voltage of the output P), amplifying a difference between them, and outputting a resultant output voltage error signal; and the power source synchronization circuit 10 for receiving an AC voltage obtained after the noise filter 2, full-wave rectifying the AC voltage, and outputting a resultant sine wave reference waveform signal.

Furthermore, the single-phase half bridge converter circuit includes the multiplier 11 for receiving the output voltage error signal supplied from the output voltage error amplifier 9 and the sine wave reference waveform signal supplied from the power source synchronization circuit 10, multiplying them, and outputting a resultant amplified output voltage error signal; the current error amplifier 12 for receiving an actual current signal generated by flow of an actual current through the current detection shunt resistor 6 and the amplified output voltage error signal supplied from the multiplier 11, comparing them with each other, amplifying an error between them, and outputting an amplified current error signal; the comparator 14 for receiving a triangular wave 13 and the amplified current error signal supplied from the current error amplifier 12, comparing them with each other, and outputting a PWM drive signal; and the semiconductor switching element PWM drive circuit 15 for receiving a PWM drive signal from the comparator 14 and switching (turning on/off) the semiconductor switching elements 5a and 5b according to the PWM drive signal.

The reactor 3 is a coil such as, for example, a toroidal coil. The reactor 3 is provided on either the R line of the AC power source or the S line. The diode bridge circuit 4 includes a diode 4a provided between the R line of the AC power source and the output P so as to flow a current in a direction of the output P, a diode 4b provided between the S line of the AC power source and the output P so as to flow a current in the direction of the output P, a diode 4c provided between the R line of the AC power source and the current detection shunt resistor 6 so as to flow a current in the direction of the AC power source, and a diode 4d provided between the S line of the AC power source and the current detection shunt resistor 6 so as to flow a current in the direction of the AC power source.

The current detection shunt resistor 6 is a minute resistor having a resistance value of, for example, approximately 10 mΩ, and it is provided between anodes of the diodes 4c and 4d and the output N. All current loops of the single-phase half bridge converter circuit pass through the current detection shunt resistor 6, and the input current of the single-phase half bridge converter circuit is detected as a voltage generated across the current detection shunt resistor 6. The semiconductor switching elements 5a and 5b are transistors, such as, for example, insulated gate bipolar transistors (IGBTs). The semiconductor switching element 5a is connected in parallel with the current detection shunt resistor 6 and one rectifying element 4c of the side to that the current detection shunt resistor 6 is connected, so as to flow a current in the direction of the output N.

The semiconductor switching element 5b is connected in parallel with the current detection shunt resistor 6 and the other rectifying element 4d of the side to that the current detection shunt resistor 6 is connected, so as to flow a current in the direction of the output N. The smoothing capacitor 7 is provided between the output P and the output N to smooth the current. The output voltage error amplifier 9 receives the desired output voltage 8 previously set and the actual output voltage (voltage of the output P), amplifies the difference between them, and outputs the output voltage error signal. The power source synchronization circuit 10 receives the AC voltage obtained after the noise filter 2, full-wave rectifies the AC voltage, and outputs a resultant sine wave reference waveform signal.

The multiplier 11 receives the output voltage error signal supplied from the output voltage error amplifier 9 and the sine wave reference waveform signal supplied from the power source synchronization circuit 10, multiplies them, and outputs a resultant amplified output voltage error signal. In the amplified output voltage error signal, the amplitude of its sine wave corresponds to the output voltage error. The current error amplifier 12 receives the actual current signal converted into a voltage and detected by the current detection shunt resistor 6 and the amplified output voltage error signal supplied from the multiplier 11, compares them with each other, amplifies the error between them, and outputs the amplified current error signal.

The comparator 14 receives the triangular wave 13 and the amplified current error signal supplied from the current error amplifier 12, compares them with each other, and outputs a PWM drive signal having, for example, a carrier frequency of 20 kHz. The semiconductor switching element PWM drive circuit 15 receives the PWM drive signal from the comparator 14 and switches (turns on/off) the semiconductor switching elements 5a and 5b according to the PWM drive signal. Since the noise filter 2 is a technique well known to those skilled in the art, description thereof will be omitted. By the way, the power source synchronization circuit 10, the output voltage error amplifier 9, the multiplier 11, the current error amplifier 12, the comparator 14, and the semiconductor switching element PWM drive circuit 15 correspond to control unit of the present invention.

In the configuration heretofore described, operation of the first embodiment will now be described by referring to the drawing. Fig. 2 is a diagram showing operation of the single-phase half bridge converter circuit according to the first embodiment. In this single-phase half bridge converter circuit, the voltage error signal obtained by amplifying the difference between the actual output voltage and the desired output voltage 8 is first generated. Furthermore, the sine wave reference waveform signal obtained by full-wave rectifying the AC voltage after the noise filter 2 is generated. These signals are multiplied. The amplified output voltage error signal, in which the amplitude of its sine wave corresponds to the output voltage error, is generated.

The amplified output voltage error signal is compared with the actual current signal converted into a voltage and detected by the current detection shunt resistor 6, and the amplified current error signal obtained by amplifying the error between them is generated. The amplified current error signal is compared with the triangular wave 13, and the PWM drive signal having the carrier frequency of 20 kHz is generated. The semiconductor switching element PWM drive circuit 15 switches the semiconductor switching elements 5a and 5b according to the PWM drive signal. As a result, the semiconductor switching elements 5a and 5b are PWM-switched simultaneously so that the power factor will become nearly unity, and so that the actual output voltage will become the desired output voltage 8.

Fig. 3 is diagram showing a flow of an input current of the single-phase half bridge converter circuit according to the first embodiment in the case where the AC power source voltage is positive. Fig. 4 is diagram showing a flow of an input current of the single-phase half bridge converter circuit according to the first embodiment in the case where the AC power source voltage is negative. When the AC power source voltage is positive and the semiconductor switching elements 5a and 5b are on, a short circuit current flows through a loop that starts with the R line of the AC power source of the noise filter 2, passes through the reactor 3, the semiconductor switching element 5a, the current detection shunt resistor 6, and the diode 4d, and ends with the S line of the AC power source of the noise filter 2, and energy is stored across the reactor 3.

Furthermore, when the AC power source voltage is positive and the semiconductor switching elements 5a and 5b are off, a current flows through a loop that starts with the R line of the AC power source of the noise filter 2, passes through the reactor 3, the diode 4a, the smoothing capacitor 7, the current detection shunt resistor 6, and the diode 4d, and ends with the S line of the AC power source of the noise filter 2, and the smoothing capacitor 7 is charged. At this time, energy stored across the reactor 3 is output to the smoothing capacitor 7 side, and boosting of the DC output voltage is conducted. When the AC power source voltage is negative and the semiconductor switching elements 5a and 5b are on, a short circuit current flows through a loop that starts with the S line of the AC power source of the noise filter 2, passes through the semiconductor switching element 5b, the current detection shunt resistor 6, the diode 4c and the reactor 3, and ends with the R line of the AC power source of the noise filter 2, and energy is stored across the reactor 3.

Furthermore, when the AC power source voltage is negative and the semiconductor switching elements 5a and 5b are off, a current flows through a loop that starts with the S line of the AC power source of the noise filter 2, passes through the diode 4b, the smoothing capacitor 7, the current detection shunt resistor 6, the diode 4d and the reactor 3, and ends with the R line of the AC power source of the noise filter 2, and the smoothing capacitor 7 is charged. At this time, energy stored across the reactor 3 is output to the smoothing capacitor 7 side, and boosting of the DC output voltage is conducted. This operation is repeated. The average current becomes a sine wave, and improvement of the power factor and suppression of harmonics are thus conducted. Furthermore, since a current in any current loop flows through the current detection shunt resistor 6, a voltage drop depending upon the actual current is generated across the current detection shunt resistor 6.

As described above, according to the first embodiment , the current detection shunt resistor 6 is provided between the diode bridge circuit 4 and the output N. Instead of conducting current detection by using a current transformer (CT), current detection is conducted by using a small-sized inexpensive current detection shunt resistor 6. By using a result of the detection as one of control parameters, the semiconductor switching elements 5a and 5b are controlled to conduct the power factor improvement, suppression of the harmonics of the power source, and DC voltage adjustment. Therefore, it is possible to reduce the size of the board and reduce the cost. This single-phase half bridge converter circuit becomes effective when applied to home electric appliances in which a circuit board (electric component) must be housed in a narrow space, such as air conditioners.

According to a second embodiment of the present invention, reactors are provided on both the R line and the S line of the AC power source to remove the common system noise in the first embodiment. Fig. 5 is a diagram showing a configuration of a single-phase half bridge converter circuit according to a second embodiment of the present invention. The basic configuration is the same as the first embodiment. The same parts as those of Fig. 1 are denoted by like characters, and description thereof will be omitted. Only the parts that are different will be described. Instead of the reactor 3 in the first embodiment, reactors 3a and 3b are provided respectively on the R line and S line of the AC power source in the single phase half bridge converter circuit. Furthermore, instead of the noise filter 2 in the first embodiment, the noise filter 2a, which is simpler in configuration, small in size, and low in price, is provided.

Fig. 6 is a diagram showing a configuration of the reactors 3a and 3b according to the second embodiment shown in Fig. 5. The reactors 3a and 3b have such a structure that the same number of turns of a copper wire are wound around cores each having a high relative permeability. The reactors 3a and 3b have such specifications that magnetic saturation is not caused up to the maximum current flowing through the reactors 3a and 3b and the reactance is not lowered remarkably. Furthermore, each of the reactors 3a and 3b has a noise attenuation characteristic of up to approximately 30 MHz (has a noise reduction characteristic of up to a legal regulation frequency range of the noise terminal voltage of the air conditioner) . Besides the function of storing and supplying energy, the reactors 3a and 3b have a function of preventing flow out of noise. As a result, the noise filter 2a can be reduced in cost and size.

Operation of the second embodiment will now be described. When the semiconductor switching elements 5a and 5b are on in the operation of the second embodiment, a short circuit current flows through the single-phase half bridge converter circuit and energy is stored across the reactors 3a and 3b. On the other hand, when the semiconductor switching elements 5a and 5b are off, the energy across the reactors 3a and 3b is output to the smoothing capacitor 7 side. By repeating the operation, boosting of the DC output voltage, improvement of the power factor, and suppression of the harmonics are conducted. Furthermore, concurrently with this operation, removal of the common system noise is conducted by the reactors 3a and 3b. By the way, other operations are the same as those of the first embodiment, and consequently description thereof will be omitted.

According to the second embodiment, the reactors 3a and 3b are provided respectively on the R line and the S line of the AC power source extending from the noise filter 2a, as described above. Therefore, the noise filter 2a can be small-sized and inexpensive. As a result, the size of the board can be further reduced, and the cost can be further reduced. This single-phase half bridge converter circuit becomes effective when applied to home electric appliances, in which a circuit board (electric component) must be housed in a narrow space, such as air conditioners.

Furthermore, cores of the two reactors can be shared. Fig. 7 is a diagram showing another example of the configuration of the reactor according to the second embodiment. In this example, reactors 3c and 3d having such a structure that the same number of turns of a copper wire are wound around the same core are provided instead of the reactors 3a and 3b. In other words, in this example, the same number of turns of copper wire are wound around a loop shaped core having a high relative magnetic permeability so as to implement such an additive connection that magnetic flux of the reactor 3c and magnetic flux of the reactor 3d are added together.

Thus the two reactors 3c and 3d share a core . Therefore, one shared core need only be provided. Furthermore, as compared with the case where two such separate reactors 3a and 3b having no interlinkage in magnetic flux are provided, the total inductance can be increased and the number of turns can be reduced. Therefore, the reactors 3c and 3d can be reduced in size, and the size of the board can be further reduced. Such a configuration using the reactors 3c and 3d that share the core can also be applied to the case where the current detection shunt resistor 6 is not provided but the CT is used as in the prior technique as shown in Fig. 8. The size and the cost of the noise filter 2a can be reduced, and the size of the reactors 3c and 3d can be reduced.

According to a third embodiment of the present invention, a part or all of the single-phase half bridge converter circuit in the first embodiment or the second embodiment is molded with insulating resin and integrated into one module. Fig. 9 is a diagram showing a configuration of a single-phase half bridge converter circuit according to the embodiment of the present invention. By the way, its basic configuration is the same as that of the first embodiment and the second embodiment. Therefore, the same components as those of Fig. 5 are denoted by like characters, and description thereof will be omitted. Only the parts that are different will now be described.

This single-phase half bridge converter circuit is obtained from the single-phase half bridge converter circuit of the first embodiment and the second embodiment by connecting the diode bridge circuit 4, the semiconductor switching elements 5a and 5b, and the current detection shunt resistor 6, which are electronic components through which large currents flow, with a lead frame 43, which is sufficiently thick in wire thickness as compared with the thin film wiring, molding them with insulating resin, and thus integrating them into one module 42. This module 42 is attached to a circuit board via board attachment terminals 41a to 41g. By the way, operation of the third embodiment is similar to the operation of the first embodiment and the second embodiment. Therefore, description thereof will be omitted.

According to the third embodiment, the diode bridge circuit 4, the semiconductor switching elements 5a and 5b, and the current detection shunt resistor 6 are molded with insulating resin and integrated into one module 42, as described above. As compared with the case where they are arranged on the thin film wiring board, the size of the board can be further reduced. The third embodiment can be utilized effectively for such products that a high voltage and a large current of approximately AC 100 to 240 V, 20 A, and DC 400 V are used and electric components must be housed in a narrow space, such as home electric appliances like air conditioners . Thin film wiring corresponding to AC 100 to 240 V, 20 A, and DC 400 V needs a wide pattern width, a long creepage distance and a long space distance. By forming a module, however, these constraints are eliminated and it is possible to reduce the size.

Furthermore, since the circuit loop area and wiring length become small, it becomes possible to constrain the radiated noise caused by wiring inductance and false operation caused by the radiated noise. Furthermore, it is also possible to mount the current detection shunt resistor 6 outside, without taking it into the module. It is also possible to easily set the current detection level by altering the resistance value of the current detection shunt resistor 6. Furthermore, control circuits, such as the power source synchronization circuit 10, the output voltage error amplifier 9, the multiplier 11, the current error amplifier 12, the comparator 14, and the semiconductor switching element PWM drive circuit 15, are also housed in the module to further reduce the size.

In the converter apparatus according to the present invention, the reactor is divided into parts and the parts are connected in parallel. Thereby, the size of the individual parts are made so small as to be able to be mounted on the board. By connecting the parts to the main circuit board without lead wires, the radiated noise and working dispersion can be reduced. By sealing the reactor, and a thermal conductive board, having a radiator, on which semiconductor switching elements are mounted, with a material, such as resin or gel, having good thermal conductivity and insulation property, the reactor is also cooled by using the radiator for the semiconductor switching elements. Furthermore, by mixing an EMC (Electric Magnetic Compatibility) countermeasure material or a material for improving the thermal conductivity into a material of resin or gel for sealing the reactor, it is possible to reduce radiated noise generated from the circuit loop of the sealed power factor improving converter apparatus and improve the radiation property.

Hereafter, a fourth embodiment not forming part of the present invention will be described by referring to Fig. 10 to Fig. 12. By the way, disposition of the electric component box in the outdoor machine and disposition of the outdoor fan and so on are the same as those of the prior technique shown in Fig. 17. The same characters as those of the prior technique denote the same or corresponding components, and description thereof will be omitted. Fig. 10 is an example of a schematic sectional view showing a converter apparatus . Fig. 11 shows a simplified circuit diagram of an air conditioner having a converter apparatus mounted thereon. Fig. 12 is an assembly diagram of a converter apparatus .

As shown in Fig. 10, semiconductor switching elements 101 and diodes 116 of a converter section shown in Fig. 11 are mounted on a thermal conductive board 114 by soldering. A case 117 of insulating resin is formed so as to take the shape of a box with a thermal conductive board 114 serving as a bottom face. The radiator 105 is adhered closely to the thermal conductive board 114 by setting screws 118. Reactors 102 reduced in size up to the board mounting size by division are mounted on a reactor board 119, and disposed over the thermal conductive board 114 in a layer form. Fixing of the thermal conductive board 114 to the board 119 and electrical connection thereof to the board 119 are conducted by using connection means, such as bus bars, taken out in a direction perpendicular to the board.

Furthermore, the space between the thermal conductive board 114 and the reactor board 119 is filled with a substance 115, such as resin or gel, having a high thermal conductivity and insulation property, and formed so that heat of the reactors 102 may be radiated by using the radiator 105. Furthermore, it is also possible to improve the thermal conductivity by mixing a filler such as alumina into a substance such as resin or gel. Further over the reactor board 119, a control board 121 is disposed. The semiconductor switching elements 101 and the like are mounted on the control board 121, and connected in the same way by using connection means such as bus bars and connectors. The top is hermetically sealed by insulating resin, and AC power source input terminals, output terminals, and control interface terminals are attached as external terminals 122.

In a control circuit according to an embodiment , the reactor 102 is divided into four parts and semiconductor switching elements 101 are also connected to the reactors 102, respectively, as shown in Fig. 11. If the reactor is divided into four parts in an air conditioner having a peak input current of approximately 30 A, the peak value of a current flowing per part can be limited to 8 A or less. Therefore, the reactor size can be made so small that the reactors may be mounted on the board, and a general purpose machine winding reactor can also be selected. Even if the number of reactors in use increases, the cost can be made lower than that of one reactor for large current, resulting in a merit. Furthermore, it also becomes possible to select the number of reactors in use according to machine kinds differing in input current value.

As for the semiconductor switching elements 101 (MOS-FETs) mounted on the thermal conductive board 114, general purpose components of surface mounting type for large current exceeding ten and several A are few. In the case of the input current of 30 A peak, therefore, one semiconductor switching element 101 or two semiconductor switching element 101 connected in parallel are provided for each reactor 102 as shown in Fig. 11. Furthermore, besides the semiconductor switching elements 101, heat generating components, such as current detection shunt resistors 123, other than the semiconductor switching elements 101, and components, such as a gate resistor 124 and a temperature sensor 125, desired to be disposed in the vicinity for driving and protecting the semiconductor switching elements 101 are also mounted on the thermal conductive board 114. If hereafter a surface mounting semiconductor switching element (MOS-FET) for larger current is put to general use, or if a semiconductor switching element, such as an IGBT, having a general purpose component up to 50 A class is used, then it is not necessary to provide a semiconductor switching element for each reactor, the number of elements of the converter section can be reduced, and semiconductor switching elements of the inverter section can be mounted in a formed space. Thus, all of the main circuit of the air conditioner can be mounted on the thermal conductive board of nearly the same size, and the size of the board can be reduced.

As shown in Fig. 12, a reactor board 119 is inserted to inside of a box shaped insulating resin case 117, and then the inside is filled with a substance, such as resin or gel, having high thermal conductivity and insulation property. In the case of the gel substance, it is also possible to previously fill the inside of the insulating resin case 117 with the gel substance and insert the reactor board 119 afterward. Furthermore, in such a converter apparatus that the power factor improvement is conducted by the semiconductor switching elements 101, the semiconductor switching elements 101 make the current and voltage changes steep. Therefore, high frequency voltage vibration occurs, and intense radiated noise is caused by using a circuit loop of the main circuit section shown in Fig. 11 as an antenna. In the converter apparatus , the circuit loop becomes small by integration and the radiated noise is suppressed. In addition, by mixing an EMC countermeasure material, such as ferrite or alumina, having an effect of suppressing the radiated noise into the substance 115 of the resin or gel into which the reactors 102 and the circuit of the converter section are sealed, the radiated noise can be suppressed remarkably.

The control board 121 disposed over the reactor board 119 has a circuit for PWM-controlling the semiconductor elements 101 so as to improve the power factor, suppress the harmonics, and implement an arbitrary bus bar voltage, and a control interface circuit with the outside. The control board 121 is connected to the top board of high conductivity having external connection terminals and the semiconductor switching elements mounted thereon, with bus bars and connectors. Furthermore, instead of providing the control board separately, it is also possible to incorporate the control circuit onto the reactor board and implement a converter apparatus having a two stage configuration of the board having high thermal conductivity and the reactor board.

In such a refrigeration cycle that a compressor 131, a condensation heat exchanger 132, a diaphragm apparatus 133, an evaporation heat exchanger 134 shown in Fig. 14 are connected one after another, it is now assumed that a converter apparatus is used in a converter/inverter apparatus for controlling a drive motor of the compressor 131. In this case, a refrigeration cycle apparatus reduced in noise, vibration and radiated noise can be obtained. Especially if the coolant used in the refrigeration cycle is changed from the conventional R22 coolant of the HCFC family, which destroys the ozone layer, to R410A, R407C or R32 of the HFC family, which does not destroy the ozone layer, or a coolant that is higher in pressure than R22, such as R6000A of the HC family, then the input power to the compressor tends to increase, and consequently the influence of the radiated noise becomes great. By connecting a plurality of reactors in parallel however, it becomes possible to shorten the length of wiring, such as the lead wires 3, through which the main current flows. Thus, a converter apparatus that is reduced in radiated noise and that is suitable for substitute coolant can be obtained.

A fifth embodiment not forming part of the present invention will now be described by referring to Fig. 13. Fig. 13 is an example of a schematic sectional view showing a converter apparatus .

As shown in Fig. 13, semiconductor switching elements 101, diodes 116, and reactors 102 reduced in size by division so as to be able to be mounted on the board are mounted on a thermal conductive board 114. A case 117 of insulating resin is formed so as to take the shape of a box with a thermal conductive board 114 serving as a bottom face. The radiator 105 is adhered closely to the thermal conductive board 114 by setting screws 118. On the thermal conductive board 114, a substance 115, such as resin or gel, having high thermal conductivity and insulation property is filled to such a degree as to hide the reactors 102. Configuration is made so as to be able to radiate the heat of the reactors 102 by using the radiator 105. By mixing an EMC countermeasure material, such as ferrite, into the substance 115 of the resin or gel in the same way as the fourth embodiment, the radiated noise can be suppressed. Furthermore, by mixing a thermal conductive material such as alumina, radiation of the reactors 102 is promoted. Over the reactors 102, a control board 121 is disposed. By connection means, such as bus bars, taken out in a direction perpendicular to the board, fixing and electrical connection of the board 121 are conducted. The top is hermetically sealed by insulating resin, and AC power source input terminals, output terminals, and control interface terminals are attached as external terminals 122. As a result, a converter apparatus having a performance similar to that of the fourth embodiment can be obtained.

As heretofore described, according to the present invention, the current detector is provided between a bridge circuit and a negative side output terminal. The control unit does not conduct current detection by using a current transformer (CT), but conducts current detection by using a small-sized inexpensive current detector. By using a result of this detection as one of control parameters, the switching elements are controlled to conduct power factor improvement, power supply harmonic suppression, DC voltage adjustment, and so on. As a result, there is brought about an effect that the board size can be reduced and the cost can be reduced.

Furthermore, the two switching elements are simultaneously switched. As a result, the power factor becomes approximately unity. In addition, the actual output voltage becomes desired output voltage. Accordingly, there is brought about an effect that the board size can be reduced and the cost can be reduced.

Furthermore, two reactors are respectively provided on two AC side input lines suppress common system noise. As a result, the noise filter can be made small-sized and inexpensive. Accordingly, there is brought about an effect that the board size can be reduced and the cost can be reduced.

Furthermore, the two reactors share a core. As a result, only one shared core is needed. In addition, as compared with the case where two separate reactors having no interlinkage in magnetic flux are provided, the total inductance can be increased and the number of turns can be decreased. As a result, there is brought about an effect that the reactor can be reduced in size and the board size can be reduced.

Furthermore, the bridge circuit, the first switching element, and the second switching element are molded with insulating resin and integrated into one module . As a result, there is brought about an effect that the board size can be further reduced.

According to the single-phase converter circuit according to the next invention, two reactors sharing a core are provided respectively on two AC side input lines and common system noise is suppressed. As a result, the noise filter can be made small-sized and inexpensive by using a small-sized reactor. Thus, there is brought about an effect that the board size can be reduced and the cost can be reduced.

Reactors used for suppression of harmonics and power factor improvement can be disposed on or near a thermal conductive board having semiconductor elements mounted thereon and having a radiator, a space between the reactors and the thermal conductive board is filled with a substance such as resin or gel having high thermal conductivity and insulation property, and thereby the reactors can also be cooled by means of thermal conduction by the radiator for cooling the semiconductor elements . It is possible to relax the disposition constraint of the reactors and suppress the temperature rise of the electric component box. Furthermore, there is brought an effect that degradation of the soldering portions of the reactors caused by the temperature rise can also be prevented.

Furthermore, by connecting at least two reactors in parallel, the peak value of a current which flows through each reactor is suppressed. Thus, the size of the reactor can be made so small as to be mounted on the board, and general purpose reactors can be used. As a result, there is brought about an effect that the radiated noise can be suppressed by size reduction of the main circuit and the cost can be reduced.

Furthermore, a material for improving the thermal conductivity is mixed into a substance such as resin or gel having high thermal conductivity and provided with insulation property. As a result, there is brought about an effect that thermal radiation of the reactors can be improved.

Furthermore, the EMC countermeasure material is mixed into a substance such as resin or gel having high thermal conductivity and provided with insulation property. As a result, there is brought about an effect that radiated noise can be remarkably suppressed in addition to the size reduction of the main circuit.

In the refrigeration cycle apparatus , a temperature detection unit is provided on a board having semiconductor elements mounted thereon and having a high thermal radiation property. As a result, there is brought about an effect that protection against thermal destruction of semiconductor elements can be conducted.

The refrigeration cycle apparatus includes reactors connected in parallel, disposed on or near a thermal conductive board having semiconductor elements and so on mounted thereon, and the converter apparatus for conducting suppression of harmonics and power factor improvement by using semiconductor switching elements, wherein the refrigeration cycle apparatus uses coolant that is higher in pressure than R22 as coolant. In such a refrigeration cycle apparatus, there is brought about an effect that the radiated noise of the refrigeration cycle apparatus can be reduced even if the input power of the compressor is increased by the use of high pressure substitute coolant.

### INDUSTRIAL APPLICABILITY

As heretofore described, a single-phase converter circuit according to the present invention is useful for reducing the board size and cost. Since semiconductor switching elements are PWM-controlled, the single-phase converter circuit according to the present invention is suitable for conducting the power factor improvement, power supply harmonic suppression, DC voltage adjustment, and so on. Furthermore, the reactor can be reduced in size enough to be mounted on the circuit board by dividing the reactor into parts and connecting the parts in parallel. It is useful for positively radiating heat with a radiator. It is suitable for relaxing the constraint on arrangement and structure, suppressing the temperature rise in the electric component box, and reducing working dispersion and radiated noise by shortening the lead wires or eliminating the lead wires.

## Claims

1. A single-phase AC-DC converter circuit comprising:
an AC power source (1);
a noise filter (2) connected to the AC power source;
a bridge circuit (4) formed by connecting four rectifiers (4a to 4d);
a current detector (6) provided between the bridge circuit (4) and a negative side output terminal;
a first semiconductor switching element (5a) connected in parallel with the current detector(6) and one of the rectifiers (4c) of a side to which the current detector (6) is connected, said first switching element (5a) being connected to said one of the rectifiers (4c) in such a manner as to be opposite in their polarities:
a second semiconductor switching element (5b) connected in parallel with the current detector (6) and the other of the rectifiers (4d) of a side to which the current detector (6) is connected, said second switching element (5b) being connected to said the other of the rectifiers (4d) in such a manner as to be opposite in their polarities; and
a control unit which controls current detection by the current detector (6) and controls the switching elements (5a, 5b), wherein said control unit includes at an output voltage error amplifier (9) adapted to receive a desired output voltage (8) and an actual output voltage, amplify a difference between then, and output a resultant output voltage error signal;
**characterised in that** the said control unit further includes:
a power source synchronization circuit (10) adapted to receive an AC voltage obtained after the noise filter (2),
so as to carry out full-wave rectifying of the AC voltage, and output a resultant sine wave reference waveform signal,
a multiplier (11) adapted to receive the output voltage error signal and the sine wave reference waveform signal, multiply them, and output a resultant amplified output voltage error signal; and
a current error amplifier (12) adapted to receive an actual current signal generated by flow of an actual current through the current detector (6) and the amplified output voltage error signal from the multiplier (11), compare them with each other, amplify an error between them and output an amplified current error signal.

2. A single-phase AC-DC converter circuit according to claim 1, wherein the first switching element (5a) and the second switching element (5b) are simultaneously switched.

3. A single-phase AC-DC converter circuit according to claim 1, further comprising two reactors (3a, 3b) respectively provided on two AC side input lines.

4. A single-phase AC-DC converter circuit according to claim 3, wherein the two reactors (3a, 3b) share a core.

5. A single-phase AC-DC converter circuit according to claim 1, wherein the bridge circuit (4), the first switching element (5a), and the second switching element (5b) are molded with insulating resin and integrated into one module.

## Patentansprüche

1. Einphasen-Gleichrichterschaltung, Folgendes umfassend:
eine Wechselstrom-Energiequelle (1);
ein Rauschfilter (2), das an die Wechselstrom-Energiequelle angeschlossen ist;
eine Brückenschaltung (4), die durch Verbinden von vier Gleichrichtern (4a bis 4d) geformt ist;
einen Stromdetektor (6), der zwischen der Brückensebaltung (4) und einem negativseitigen Ausgangsanschluss bereitgestellt ist;
ein erstes Halbleiter-Schaltelement (5a), parallelgeschaltet mit dem Stromdetektor (6) und einem der Gleichrichter (4c) einer Seite, an die der Stromdetektor (6) angeschlossen ist, wobei das erste Schaltelement (5a) an den einen der Gleichrichter (4c) auf eine solche Weise angeschlossen ist, dass sie in ihren Polaritäten entgegengesetzt sind;
ein zweites Halbleiter-Schaltelement (5b), parallelgeschaltet mit dem Stromdetektor (6) und dem anderen der Gleichrichter (4d) einer Seite, an die der Stromdetektor (6) angeschlossen ist, wobei das zweite Schaltelement (5b) an den anderen der Gleichrichter (4d) auf eine solche Weise angeschlossen ist, dass sie in ihren Polaritäten entgegengesetzt wind; und
eine Steuereinheit, die Stromdetektion durch den Stromdetektor (6) steuert und die Schaltelemente (5a, 5b) steuert, worin die Steuereinheit einen Ausgangsspannungs-Fehlerverstärker (9) enthält, der dazu angepasst ist, eine gewünschte Ausgangsspannung (8) und eine tatsächliche Ausgangsspannung zu empfangen, eine Differenz zwischen ihnen zu verstärken und ein resultierendes Ausgangsspannungs-Fehlersignal auszugeben;
**dadurch gekennzeichnet, dass** die Steuereinheit außerdem umfasst:
eine Energiequellen-Synchronisationsschaltung (10), dazu angepasst, eine Wechselspannung zu empfangen, die nach dem Rauschfilter (2) erhalten wird, um Vollweggleichrichtung der Wechselspannung auszuführen, und ein resultierendes Sinuswellen-Referenz-Wellenformsignal auszugeben,
einen Multiplizierer (11), dazu angepasst, das Ausgangsspannungs-Fehlersignal und das Sinuswellen-Referenz-Wellenformsignal zu empfangen, sie zu multiplizieren und ein resultierendes verstärktes Ausgangsspannungs-Fehlersignal auszugeben; und
einen Stromfehlerverstärker (12), dazu angepasst, ein tatsächliches Stromsignal, das durch den Fluss eines tatsächlichen Stroms durch den Stromdetektor (6) erzeugt wird, und das verstärkte Ausgangsspannungs-Fehlersignal vom Multiplizierer (11) zu empfangen, sie miteinander zu vergleichen, einen Fehler zwischen ihnen zu verstärken und ein verstärktes Stromfehlersignal auszugeben.

2. Einphasen-Gleichrichterschaltung nach Anspruch 1, worin das erste Schaltelement (5a) und das zweite Schaltelement (5b) gleichzeitig geschaltet werden.

3. Einphasen-Gleichrichterschaltung nach Anspruch 1, außerdem zwei Drosselspulen (3a, 3b) umfassend, die jeweils auf zwei wechselstromseitigen Eingangsleitungen bereitgestellt sind.

4. Einphasen-Gleichrichterschaltung nach Anspruch 3, worin die zwei Drosselspulen (3a, 3b) einen gemeinsamen Kern haben.

5. Einphasen-Gleichrichterschaltung nach Anspruch 1, worin die Brückenschaltung (4), das erste Schaltelement (5a) und das zweite Schaltelement (5b) mit Isolierharz gepresst und in ein Modul integriert sind.

## Revendications

1. Circuit convertisseur alternatif-continu monophasé comprenant :
une source d'alimentation alternative (1) ;
un filtre de bruit (2) connecté à la source d'alimentation alternative ;
un circuit de pont (4) formé en connectant quatre redresseurs (4a à 4d) ;
un détecteur de courant (6) prévu entre le circuit de pont (4) et une borne de sortie côté négatif ;
un premier élément de commutation à semi-conducteur (5a) connecté en parallèle avec le détecteur de courant (6) et l'un des redresseurs (4c) d'un côté auquel le détecteur de courant (6) est connecté, ledit premier élément de commutation (5a) étant connecté audit un des redresseurs (4c) de manière à ce que leurs polarités soient opposées ;
un deuxième élément de commutation à semi-conducteur (5b) connecté en parallèle avec le détecteur de courant (6) et l'autre des redresseurs (4d) d'un côté auquel le détecteur de courant (6) est connecté, ledit deuxième élément de commutation (5b) étant connecté audit autre des redresseurs (4d) de manière à ce que leurs polarités soient opposées ; et
une unité de commande qui commande la détection de courant par le détecteur de courant (6) et qui commande les éléments de commutation (5a, 5b), dans lequel ladite unité de commande comprend, à une sortie, un amplificateur d'erreur de tension (9) conçu pour recevoir une tension de sortie souhaitée (8) et une tension de sortie réelle, amplifier une différence entre elles, et délivrer un signal d'erreur de tension de sortie résultant ;
**caractérisé en ce que** ladite unité de commande comprend en outre :
un circuit de synchronisation de source d'alimentation (10) conçu pour recevoir une tension alternative obtenue après le filtre de bruit (2), de manière à effectuer un redressement double alternance de la tension alternative, et à délivrer un signal de forme d'onde de référence d'onde sinusoïdale résultant ;
un multiplicateur (11) conçu pour recevoir le signal d'erreur de tension de sortie et le signal de forme d'onde de référence d'onde sinusoïdale, les multiplier, et délivrer un signal d'erreur de tension de sortie amplifié résultant ; et
un amplificateur d'erreur de courant (12) conçu pour recevoir un signal de courant réel généré par la circulation d'un courant réel à travers le détecteur de courant (6) et le signal d'erreur de tension de sortie amplifié du multiplicateur (11), les comparer l'un à l'autre, amplifier une erreur entre eux et délivrer un signal d'erreur de courant amplifié.

2. Circuit convertisseur alternatif-continu monophasé selon la revendication 1, dans lequel le premier élément de commutation (5a) et le deuxième élément de commutation (5b) sont commutés simultanément.

3. Circuit convertisseur alternatif-continu monophasé selon la revendication 1, comprenant en outre deux réacteurs (3a, 3b) respectivement prévus sur deux lignes d'entrée côté alternatif.

4. Circuit convertisseur alternatif-continu monophasé selon la revendication 3, dans lequel les deux réacteurs (3a, 3b) partagent un noyau.

5. Circuit convertisseur alternatif-continu monophasé selon la revendication 1, dans lequel le circuit de pont (4), le premier élément de commutation (5a) et le deuxième élément de commutation (5b) sont moulés avec une résine isolante et intégrés dans un module.
